# EUROPEAN PATENT SPECIFICATION

(11) **EP 3 262 958 B1**
(45) Date of publication and mention of the grant of the patent: **27.11.2024**
(21) Application number: 17177935.8
(22) Date of filing: 26.06.2017
(51) Int. Cl.: A23L 29/212, A23L 35/00, A23L 13/00, A23J 3/00, A23L 13/40, A23L 13/60

(54) **PREPARATION MADE FROM LARVES OF MEALWORMS OR LESSER MEALWORMS, ITS USE AND METHOD FOR THE PRODUCTION THEREOF**
ZUBEREITUNG AUS LARVEN VOM MEHLKÄFER ODER VOM GLÄNZENDSCHWARZEN GETREIDESCHIMMELKÄFER, IHRE VERWENDUNG UND VERFAHREN ZU IHRER HERSTELLUNG
PRÉPARATION À BASE DE LARVES DE TÉNÉBRION MEUNIER OU DE PETIT TÉNÉBRION, SON UTILISATION ET SON PROCÉDÉ DE FABRICATION

(30) Priority: 27.06.2016 BE 201600111; 18.04.2017 BE 201700044
(43) Date of publication of application: 03.01.2018
(73) Proprietor: Katholieke Universiteit Leuven, 3000 Leuven (BE); Thomas More Kempen vzw, 2440 Geel (BE)
(72) Inventor: BOECKX, Hilde, 2390 Malle (BE); CLAES, Johan, 2400 Mol (BE); SPAEPEN, Rietje, 2260 Westerlo (BE); VAN CAMPENHOUT, Leni, 2440 Geel (BE); VAN DER BORGHT, Michael, 2300 Turnhout (BE)
(74) Representative: Arnold & Siedsma

(56) References cited:
- CN-A- 105 379 796
- US-A- 4 204 005
- US-A1- 2016 037 808
- ANONYMOS: "Are You Ready for Mealworm Quiche?", ALTERNATIVES JOURNAL, 16 December 2014 (2014-12-16), XP055327380, Retrieved from the Internet <URL:http://www.alternativesjournal.ca/community/blogs/mouthful/are-you-ready-mealworm-quiche> [retrieved on 20161208]
- SHELOMI MATAN ED - ANESE MONICA ET AL: "Why we still don't eat insects: Assessing entomophagy promotion through a diffusion of innovations framework", TRENDS IN FOOD SCIENCE AND TECHNOLOGY, vol. 45, no. 2, 2015, pages 311 - 318, XP029271218, ISSN: 0924-2244, DOI: 10.1016/J.TIFS.2015.06.008
- ARNOLD VAN HUIS ET AL: "The Insect Cookbook : Food for a Sustainable Planet", 4 March 2014 (2014-03-04), New York, XP055327452, ISBN: 978-0-231-16684-3, Retrieved from the Internet <URL:https://cup.columbia.edu/book/the-insect-cookbook/9780231166843> [retrieved on 20161208], DOI: 10.7312/van-16684
- ANONYMOUS: "Entomophagy - Day 1 - Mealworm Pancakes + Cricket Pasta", 7 December 2012 (2012-12-07), XP055327389, Retrieved from the Internet <URL:http://entomophagy-247-blog.tumblr.com/post/37434558063/day-1-mealworm-pancakes-cricket-pasta> [retrieved on 20161208]

## Description

### TECHNICAL AREA

The current invention is in the area of meat and/or fish substitute preparations based on edible insects, to be used for human food as well as animal feed. More specifically, the current invention concerns a liquid preparation based on edible insect larvae that can be used for the preparation of insect-based feed and/or food products with the appearance of feed and/or food products such as minced meat, meatloaf, sausages, stir-fry, small cubes (any shape) and hamburgers.

### BACKHOMOGENIZED TO THE INVENTION

A great deal of energy is lost in the process of converting vegetable material into animal consumer products such as meat and milk. This means that a lot of energy, raw materials and agricultural land is required for meat production. Insect breeding, on the other hand, has very few requirements. The space required is minimal because insects live close together; the need for food and water is low; and insects demand little of nutritional substrates. Furthermore, in contrast to animal husbandry, emissions of greenhouse gases (CO2, CH4 and N2 O and ammonia are much lower, which means that the environmental impact is far less damaging. An emission of 14.8 kg CO2 equivalent results from the production of 1 kg of beef. This value is much lower for pigs (3.8 kg) and chickens (1.1 kg). Insects perform even better. In general terms, it is fair to say that insects are more eco-friendly than traditional cattle production.

The production of these animal proteins for human consumption could be made more efficient by using insects. This can occur directly as human food (entomophagy) or indirectly as cattle feed or by extracting proteins from the insects and then integrating them in food products. A publication in Alternatives Journal of Dec, 16 2014 entitled "Are You Ready for Mealworm Quiche?" discloses that insect meal (e.g. from mealworms) can be used in edible compositions, as an alternative protein source.

Entomophagy is a centuries-old practice. In the West it has been largely sidelined, but in tropical and subtropical countries the tradition lives on ( Van Itterbeeck J, 2008, Entomophagy and the West: Barriers and possibilities, ecological advantages and ethical desirability. Wageningen: Laboratory for Entomology ). In these countries too, however, there are increasing Western influences resulting in fewer people practising entomophagy than before ( FAO, 2010 ; Yen AL, 2009, Entomological Research, 39, 289-298 .)

Entomophagy is almost non-existent in the West, largely because insects are usually seen as the cause of plagues and infestations. People find the idea of eating insects disgusting.

If the insects can be processed in such a way as to be unrecognisable and if these preparations come in the form of feed and/or food products, then it might be possible to make the eating of insects acceptable.

It is the object of this invention to demonstrate a preparation and method that can be used in the preparation of various types of insect-based feed and/or food products to replace traditional meat products such as minced meat, hamburgers, meatloaf, stir-fry strips, small cubes and sausages. An additional benefit of the preparation and method of this invention is that it provides a simple way of preparing these different types of feed and/or food products so that they contain comparable levels of animal (insect) proteins to traditional meat products.

### SUMMARY OF THE INVENTION

It is well known that non-homogenised pieces or cubes of insect larvae are easier to mix into a traditionally prepared feed and/or food product, but that a homogenised insect larvae mix does not lend itself well to being processed into solid wet food and/or food products such as minced meat, Sausage, hamburger, pancake, stir-fry strips and cubes.

The first aspect of the current application concerns a liquid, viscous or dry, rehydratable preparation based on homogenised dead edible insect larvae and a binding agent that is added in a ratio of 1 to 30 gram of dry matter binding agent per 100 gram homogenised dead edible insect larvae (wet weight).

The second aspect of the current application concerns the use of the preparation of the first aspect for the preparation of insect-based feed and/or food products, whereby the liquid preparation is coagulated. This coagulation is preferably achieved by heating.

The third aspect of the current application concerns a method for making a liquid, viscous or dry, rehydratable preparation of edible insect larvae whereby edible insect larvae are homogenized and to which binding agents are added in a ratio of 1 to 30 gram binding agent on a dry matter basis per 100 gram dead homogenised edible insect larvae (wet weight).

Experiments have shown that not all binding agents are suitable for converting a wet or dried rehydratable homogenised insect larvae matrix into a feed and/or food product with a solid structure or in a hierarchically structured wet feed and/or food product. The highest organoleptic and structural quality was achieved with protein binding agents and more specifically with hydrophilic proteins, such as birds' egg protein, ovomucin, ovoglobulin, ovoalbumin, casein, vegetable proteins or gelatin (either in combination or not with potato starch, in combination with corn starch, or in combination with chickpea flour, or in combination with breadcrumbs).

The fourth aspect of the current application concerns a method for making a liquid preparation of edible insect larvae whereby edible insect larvae are homogenized, and whereby hydrophilic proteins are added to homogenised edible insect larvae, in combination or not with potato starch, in combination or not with corn starch, or in combination or not with chickpea flour, or in combination or not with breadcrumbs. The best ratio for this hydrophilic protein binding agent is 1 to 30 gram binding agent on dry matter basis per 100 gram insect larvae mix (wet weight).

A fifth aspect of the current application concerns a premix with homogenised insect larvae and a hydrophilic protein binding agent in the ratio of 1 to 30 gram binding agent on dry matter basis per 100 gram insect larvae matrix. This premix for preparing a wet solid feed and/or food product or for preparing a hierarchically structured wet food product of the current application can be in the form of a dry or wet product. An advantage of this premix is that it can be converted by physical processes in wet form or after rehydration into (i) wet solid feed and/or food products, (ii) hierarchically structured wet food products with an acceptable organoleptic quality, and into (iii) solid meat and/or fish substitute preparations and feed and/or food products such as hamburgers, minced meat and sausages with a great similarity to the original meat or fish product.

The application includes the following embodiments. The current application allows for the preparation of a meat and/or fish substitute solid wet feed and/or food product or hierarchically structured wet meat and/or fish substitute feed and/or food product based on a homogenised insect larvae mass and a protein binding agent additive. More specifically, the meat and/or fish substitute solid wet feed and/or food product or hierarchically structured wet meat and/or fish substitute feed and/or food product is prepared based on a homogenised insect larvae mass and a hydrophilic protein additive. In a specific embodiment the meat and/or fish substitute solid wet feed and/or food product or hierarchically structured wet meat and/or fish substitute feed and/or food product is prepared according to one of the abovementioned embodiments, whereby the additive is one of the following proteins: birds' egg protein, mucin, globulin, albumin, casein, gelatin, vegetable proteins or a mixture of these. In an additional embodiment the solid wet feed and/or food product has the appearance of an insect larvae mince, insect larvae pancake, insect larvae Sausage, insect larvae hamburger, insect cubes, insect stir-fry strips, insect sausages, feed products such as cubes for dogs or cats, containing hydrophilic protein and insect larvae homogenate. Another aspect of the current application consists of a liquid, viscous or dry, rehydratable preparation that contains a homogenised insect larvae mass and a hydrophilic protein and can be physically processed into a meat and/or fish substitute solid wet feed and/or food product or hierarchically structured wet meat and/or fish-substituting feed and/or food product. In another embodiment the liquid, viscous or dry, rehydratable preparation that contains a homogenised insect larvae mass and a hydrophilic protein is used for the physical preparation of feed and/or food products such as minced meat, meatloaf, Sausages, hamburgers, strips, cubes and other formats whose form is dictated by the form in which the coagulation is carried out. In another embodiment of the application the liquid, viscous or dry, rehydratable preparation contains a hydrophilic protein. In another embodiment of the application the liquid, viscous or dry, rehydratable preparation contains a hydrophilic protein in combination with potato starch, corn starch, chickpea flour, or breadcrumbs or a combination of potato starch, corn starch, chickpea flour or breadcrumbs. More specifically, the hydrophilic protein of the liquid, viscous or dry, rehydratable preparation is one of the following proteins: birds' egg protein, mucin, globulin, albumin, casein, vegetable proteins such as soy protein, gelatin or a mixture of these. In a specific embodiment of the current application the liquid, viscous or dry, rehydratable preparation contains spices, colourings and/or aromas. In a specific embodiment of the current application the liquid, viscous or dry, rehydratable preparation has a moisture content between 50% (w/w) and 75% (w/w) and a protein content between 5% (w/w) and 25% (w/w).

The liquid, viscous or dry rehydratable preparation of the current application has a Farrall index ranging from 5 to 7. In a specific embodiment of the application the composition of the liquid, viscous or dry, rehydratable preparation consists of 100 gram homogenised dead insect larvae, 0 to 5 gram potato starch, 0 to 15 gram spices and/or flavourings, 0 to 15 gram fibre, 1 to 30 gram protein binding agent and 1 to 100 gram water. In another embodiment the liquid, viscous or dry, rehydratable preparation or the solid wet feed and/or food product or hierarchically structured wet feed and/or food product is made on the basis of the liquid, viscous or dry, rehydratable preparation free of pieces of insect larvae. In another embodiment the 1 to 30 gram dry matter of hydrophilic protein is added to the liquid, viscous or dry, rehydratable preparation or the solid wet feed and/or food product or hierarchically structured wet feed and/or food product per 100 gram homogenised edible insect larvae of the original wet weight. In another embodiment the proportion of the homogenised insect larvae in the liquid, viscous or dry, rehydratable preparation or the feed and/or food product is at least 40%, preferably at least 45%, at least 50%, at least 60%, at least 70%, at least 80%, at least 99%, at least 95% or at least 99% as a percentage ratio of the wet weight of the dead homogenised insect larvae in relation to the total weight of the preparation. In an additional embodiment the insects of the liquid, viscous or dry, rehydratable preparation or the feed and/or food product of the current application are selected from morio worms, mealworms, lesser mealworms, the wax moth caterpillar or the caterpillar of the silk moth. In another aspect the current application consists of a method for converting a liquid, viscous or dry, rehydratable preparation into a solid wet feed and/or food product or a hierarchically structured wet feed and/or food product by means of heating. In a more specific embodiment of the current application a method is described whereby a liquid, viscous or dry, rehydratable preparation is converted into a solid wet feed and/or food product or a hierarchically structured wet feed and/or food product by means of pressure and temperature. In a more specific embodiment of the current application the liquid, viscous or dry, rehydratable preparation is converted into an insect larvae mince by cooking while stirring frequently.

In another embodiment of the current application the liquid, viscous or dry, rehydratable preparation is cooked while stirring frequently to form a granular preparation with the appearance of cooked minced meat, whereby the grains of the granular preparation range in size from 85 mm3 to 850 mm3 . This granular preparation can be used as a substitute for minced meat, in tomato preparations such as spaghetti sauce, lasagne and pizza, as a filling for pitta bread and as a filling for vegetables, like peppers. In another embodiment of the current application the liquid, viscous or dry, rehydratable preparation is baked on a flat surface or in a pan and not stirred to form an insect pancake. In another embodiment of the current application the liquid, viscous or dry, rehydratable preparation is put in a baking form and then heated in an oven to make a meatloaf-type product. In another embodiment of the current application the liquid, viscous or dry, rehydratable preparation is placed in a sealed casing and then cooked in an oven to make a sausage-type product. In another embodiment of the current application, the liquid, viscous or dry, rehydratable preparation is poured into an open baking form, such as a baking ring, and then baked on a baking sheet or in a pan to make a hamburger-type product. The current application also describes a method for making a liquid, viscous or dry, rehydratable preparation of edible insect larvae whereby edible insect larvae are homogenized and to which binding agents are added in a ratio of 1 to 25 gram binding agent on a dry matter basis per 100 gram killed homogenised edible insect larvae. In a further embodiment the insect larvae are killed prior to homogenization. In a specific embodiment spices and/or flavourings are added to the liquid preparation, in amounts ranging from 0% to 15% on weight basis. In an embodiment of the current application the method for making a liquid, viscous or dry, rehydratable preparation of edible dead insect larvae describes the mixing in of 35 gram to 95 gram water per 100 gram killed homogenised edible insect larvae. This method also describes the addition of the egg white of birds' eggs, more specifically that the egg white from chicken eggs. In a further embodiment of the current application the method describes the addition of dried egg protein, whereby between 2 and 10 gram water are added per gram dried egg protein. The method of the current application for making a liquid, viscous or dry, rehydratable preparation can be used for edible larvae selected from the following species: morio worms, mealworms, lesser mealworms, the wax moth caterpillar, the caterpillar of the silk moth. In another embodiment of the current application the edible insect larvae are homogenized using a microcutter and/or bowl chopper. In another embodiment of the current application the binding agent added during the production of the liquid, viscous or dry, rehydratable preparation consists of a combination of a birds' egg protein and a starch, more specifically the binding agent consists of a combination of an egg protein and potato starch or a combination of an egg protein and corn starch or a combination of an egg protein and breadcrumbs. In a further embodiment of the current application all ingredients for producing a liquid, viscous or dry, rehydratable preparation are mixed using a mixing system such as a bowl chopper. In a further embodiment of the current application the liquid, viscous or dry, rehydratable preparation is baked on a baking sheet at a temperature ranging from 90°C to 120°C with frequent mixing of the mixture until it resembles fried minced meat. In another embodiment of the current application the liquid, viscous or dry, rehydratable preparation is baked in an oven in a baking form to produce a meatloaf-type feed and/or food product.

In another embodiment of the current application the liquid, viscous or dry, rehydratable preparation is placed in a sealed casing and then cooked to make a sausage-type feed and/or food product.

In another embodiment of the current application the liquid, viscous or dry, rehydratable preparation is baked on a baking sheet or in a pan without stirring to form a pancake.

In another embodiment of the current application the liquid, viscous or dry, rehydratable preparation is poured into an open baking form, such as a baking ring, and then baked on a baking sheet or in a pan to produce a hamburger-type feed and/or food product.

The current application consists of a liquid, viscous or dry, rehydratable preparation containing homogenised edible insect larvae and an added hydrophilic protein as binding agent, whereby the preparation contains 1 to 30 gram added protein dry matter as binding agent per 100 gram wet weight homogenised edible insect larvae (wet weight) and whereby the homogenised edible insect larvae mass has a Farrall index ranging from 5 to 7. In another embodiment the current application consists of a liquid, viscous or dry, rehydratable preparation containing homogenised edible insect larvae and an added hydrophilic protein, which can be selected from the following proteins: birds' egg protein, a mucin, a globulin, an albumin, a casein, a gelatin, a whey protein, vegetable proteins or a mixture of these, as binding agent whereby the preparation contains 1 to 30 gram added protein dry matter as binding agent per 100 gram wet weight homogenised edible insect larvae (wet weight) and whereby the homogenised edible insect larvae mass has a Farrall index ranging from 5 to 7. In an additional embodiment the current application consists of a liquid, viscous or dry, rehydratable preparation containing homogenised edible insect larvae and egg protein as binding agent whereby the preparation contains 1 to 30 gram added egg protein dry matter as binding agent per 100 gram wet weight homogenised edible insect larvae (wet weight) and whereby the homogenised edible insect larvae mass has a Farrall index ranging from 5 to 7. In an additional embodiment the current application consists of a liquid, viscous or dry, rehydratable preparation containing homogenised edible insect larvae, whereby the edible insect larvae are selected from morio worms, lesser mealworms, the wax moth caterpillar, the caterpillar of the silk moth and whereby the edible larvae make up 40% (w/w) to 99% (w/w) of the stated preparation, and an added hydrophilic protein as binding agent whereby the preparation contains 1 to 30 gram added protein dry matter as binding agent per 100 gram wet weight homogenised edible insect larvae (wet weight) and whereby the homogenised edible insect larvae mass has a Farrall index ranging from 5 to 7. In a further embodiment the current application consists of a liquid, viscous or dry, rehydratable preparation containing homogenised edible insect larvae and an added hydrophilic protein as binding agent whereby the preparation contains 1 to 30 gram added protein dry matter as binding agent per 100 gram wet weight homogenised edible insect larvae (wet weight) and whereby potato starch can be added to the preparation in a ratio of less than 1 to 5 and preferably less than 1 to 10 of the hydrophilic protein and whereby the homogenised edible insect larvae mass has a Farrall index ranging from 5 to 7. The current application also includes a solid wet feed and/or food product made on the basis of the preparation of the liquid, viscous or dry, rehydratable preparation, which contains homogenised edible insect larvae and added hydrophilic protein as binding agent, whereby the preparation contains 1 to 30 gram added protein dry matter as binding agent per 100 gram wet weight homogenised edible insect larvae (wet weight), and whereby the homogenised edible insect larvae mass has a Farrall index ranging from 5 to 7 and which has the appearance of minced meat, pancake, sausage, hamburger, cubes, stir-fry strips, sausages, cubes for pet food and that can be used as meat and/or fish substitutes in the feed and/or food industry.

The current embodiment also includes a method for making a liquid, viscous or dry rehydratable preparation of edible insect larvae whereby edible insect larvae are homogenized and to which a hydrophilic protein is added in a ratio of 1 to 30 gram binding agent on dry matter basis per 100 gram homogenised edible insect larvae and whereby the edible larvae are selected from morio worms (larvae of Zophobias morio ), mealworms (larvae of Tenebrio molitor), lesser mealworms (larvae of Alphitobius diaperinus ), the wax moth (caterpillar of Galleria mellonella), the caterpillar of the silk moth (Bombyx mori ) and which make up 40% (w/w) to 99% (w/w) of the stated preparation and whereby the binding agent is one of the following proteins: birds' egg protein, a mucin, a globulin, an albumin, a casein, a gelatin, a whey protein, vegetable proteins or a mixture of these, and whereby the liquid, viscous or dry rehydratable preparation is then coagulated by heating. This coagulation by heating can be done by baking on a baking sheet at a temperature ranging from 90°C to 140°C with frequent stirring of the mixture until it resembles fried minced meat; or
- baking in an oven in a baking form, to form a meatloaf-type feed and/or food product; or
- cooking of the liquid, viscous or dry rehydratable preparation of insect larvae in a sealed casing to form a Sausage-type feed and/or food product; or
- baking on a baking sheet or in a pan without stirring to form a pancake or omelette-type food product; or
- pouring into an open baking form such as a baking ring whereby the mixture is subsequently baked on a baking sheet or in a pan, to form a hamburger-type feed and/or food product.

The current application includes the use of the liquid, viscous or dry rehydratable preparation, which comprises homogenised edible insect larvae and an added hydrophilic protein as binding agent and whereby the preparation contains 1 to 30 gram added protein dry matter as binding agent per 100 gram wet weight homogenised edible insect larvae (wet weight), for the production of insect-based feed and/or food products whereby this liquid, viscous or rehydratable preparation is coagulated by heating in a form that dictates the final form of the insect-based feed and/or food products and
- whereby the liquid, viscous or dry rehydratable form is cooked with frequent stirring to form a granular preparation with the aspect of fried minced meat; or
- whereby the liquid, viscous or dry rehydratable form of the preparation is baked on a flat sheet without stirring to form an insect pancake or an insect omelette; or
- whereby the liquid, viscous or dry rehydratable form is placed in a baking form and then heated in an oven to form a baked preparation with the aspect of a meatloaf; or
- whereby the liquid, viscous or dry rehydratable form is placed in a sealed casing and then cooked to form a cooked preparation with the appearance of a Sausage; or
- whereby the liquid, viscous or dry rehydratable preparation is placed in an open baking form, such as a baking ring, and then baked on a baking sheet or in a pan to form a cooked preparation with the appearance of a hamburger;
- whereby the liquid, viscous or dry rehydratable preparation is coagulated by heating to form stir-fry strips and cubes.

### DEFINITIONS

The term "morio worms" as used in this application refers to larvae of the morio beetle, Zophobas morio.

The term "mealworms" as used in this application refers to larvae ofTenebrio molitor. The term "Lesser mealworms" as used in this application refers to larvae ofAlphitobius diaperinus.

The term "wax moth caterpillar" as used in this application refers to the caterpillar of Galleria mellonella.

The term "caterpillar of the silk moth" as used in this application refers to the caterpillar of Bombyx mori.

The term "egg protein" as used in this application refers to the protein from chicken eggs.

The term "flavouring substances" as used in this application refers to aromas and flavourings.

### DETAILED DESCRIPTION

A first aspect of this application concerns a liquid, viscous or dry, rehydratable preparation consisting of homogenised edible insect larvae and an added binding agent. This liquid, viscous or dry, rehydratable preparation preferably contains 1 to 30 gram added binding agent (dry matter) per 100 gram homogenised dead edible insect larvae (wet weight). The binding agent added to the preparations for the first aspect of the current application is typically selected from the following non-exhaustive list of binding agents: vegetable proteins, animal proteins and starch (e.g. potato starch, corn starch, rice starch, tapioca starch, wheat starch) or a combination of the stated binding agents. The animal proteins can consist of proteins from birds' eggs. More specifically the animal protein can be an egg protein. Egg protein or egg protein in combination with potato starch or egg protein in combination with corn starch and egg protein in combination with breadcrumbs or egg protein in combination with chickpea flour appeared to be especially suitable for making the stated liquid, viscous or dry, rehydratable preparation of the current application. When egg protein is added as binding agent, egg protein powder is preferred, dissolved beforehand in 2 to 10 gram water, preferably in 4 to 9 gram of water, e.g. in 6 to 8 gram of water per gram egg protein powder. The binding agent consists preferably of a combination of a starch, preferably potato starch, and a protein, preferably egg protein. When using egg protein, the ratio of starch/egg protein used on weight basis (dry weight) can vary between 1/1 and 1/20, for example between 1/5 and 1/15 or between 1/8 and 1/12. The preparations corresponding to the current application contain at least 1 g, preferably at least 5 g, preferably at least 7 g such as at least 9 g, at least 11 g or at least 13 g binding agent (dry matter) per 100 g homogenised dead edible insect larvae (wet weight). In addition, preferably no more than 30 g, such as no more than 25 g, such as no more than 20 g or no more than 18 g, or no more than 17 g or no more than 15 g binding agent (dry matter) is added per 100 gram homogenised dead edible insect larvae (wet weight).With the intention of showing the characteristics of the application to better advantage, a preferred embodiment form for suitable binding agents is described below, with reference to the non-exhaustive examples and accompanying figures. These binding agents are selected for their ability to transform an insect larvae homogenate or insect larvae paste into a wet solid food form or into a hierarchically structured wet food product according to the physical processes of the application. The current application is in no way limited to the embodiments described in the examples and shown in the diagram, but an additive for food for humans and animals in line with the application can be achieved in various different forms and dimensions without reaching beyond the context of the application.A specific embodiment of the application concerns the composition of a liquid, viscous or dry rehydratable preparation comprising homogenised insect larvae with an edible (for humans and/or animals) hydrophilic protein, such as egg protein, ovomucin, ovoglobulin, ovoalbumin, casein or gelatin (whether or not in combination with potato starch, whether or not in combination with corn starch, and whether or not in combination with chickpea flour, and whether or not in combination with breadcrumbs). This specifically added protein binding agent can be in the form of a solution or a suspension. It can also be in rehydratable powder form. The protein solution or protein suspension can therefore start as a protein powder.These results also show that the composition of this liquid, viscous or dry, rehydratable preparation of insect larvae paste or insect larvae homogenate with hydrophilic protein binding agent has the technical effect of facilitating the processing of homogenised insect larvae, preferably mealworms, by physical interventions such as heat, pressure or friction, into an edible solid food product such as pancakes by baking or such as minced meat by baking with frequent stirring or even an edible hierarchically structured food product by friction (extrusion). Experimental research appeared, for example, to show that the following edible insect larvae lend themselves to this process: morio worms, mealworms, lesser mealworms, the wax moth caterpillar, the caterpillar of the silk moth. Results with alginate, arrowroot, buckwheat flour, rehydrated egg protein, guar gum, locust bean gum, chickpea flour, corn starch, breadcrumbs, xanthan gum binding agents, also show that not all binding agents are equally suitable for the correct physical transformation of homogenised insect larvae into an edible solid or an edible hierarchically structured feed and/or food product.

The current application concerns a composition of food and feed products. More specifically the application is intended for compositions of food for humans and/or animal, preferably for human and/or mammal. It is well known that a technical solution for processing an edible product into a structured feed and/or food product can have the technical effect of producing a different mouth feel and preference. Food companies want to be able to integrate insect larvae into a feed and/or food product for the consumer.The disadvantage is that insect larvae in pure form are not suitable for this, unless used as insect pieces or cubes. But a homogeneous insect larvae product or larvae pasta is a challenge whereby the composition and the additive deliver very different technical results.The current application aims to provide a solution for at least one of the abovementioned and other disadvantages, so that it provides a selected additive for a homogenised insect larvae mix or paste after physical processing, which gives a solid feed and/or food product or hierarchically structured food product that is acceptable to the consumer. One advantage of this kind of premix is that it can be delivered to a food-processing factory as an insect raw material in the form of a wet or rehydratable dry premix for physical conversion into an edible solid wet or hierarchically structured wet food product without further chemical processing.

The protein binding agent used is preferably added during the physical process of transformation of a dry premix or a wet homogenised paste into a wet solid feed and/or food component or into a hierarchically structured wet food product. An advantage of the use of such a binding agent protein is that it is available on an industrial scale and can be integrated in the processes in order to obtain a wet solid feed and/or food component from a homogeneous insect larvae paste or the dried insect powder.

Another advantage of the use of such a binding agent protein is that it allows for spices, pepper, salt, onion powder and garlic powder or other aromas to be added to a homogeneous insect larvae paste or the dried insect powder, without causing a negative impact on the physical transformation of the homogeneous insect larvae paste into a wet solid food component.

In line with the first aspect of the current application, the liquid, viscous and the rehydratable dry preparation typically has a moisture content of approximately 50% (w/w) to 75% (w/w), for example between 60% (w/w) and 70% (w/w).

The insect larvae used for producing this liquid, viscous or dry rehydratable preparation are preferably dead before the homogenisation. The edible larvae can be selected from the following non-exhaustive list of morio worms, mealworms, lesser mealworms, the wax moth caterpillar, and the caterpillar of the silk moth. The percentage of dead homogenised insect larvae in the preparations of the current application is at least 30%, such as for example at least 40%, such as for example at least 45%, such as for example at least 50%, at least 60%, at least 70%, at least 80%, at least 90%, at least 95% or at least 99%. The percentage is calculated as the percentage ratio of wet weight of dead homogenised insect larvae to total weight of preparation (i.e. dead homogenised insect larvae, spices, flavourings, binding agents and water).

The liquid, viscous or dry, rehydratable preparation can also contain spices and/or flavourings. These can be selected (as a combination) from the following non-exhaustive list: salt, pepper, nutmeg, paprika powder, onions, ginger, coriander, garlic, chili, thyme, basil, oregano, mustard, marjoram, rosemary, clove, cumin, parsley, cocoa, cinnamon, caraway seed, turmeric, celery powder, chives. The quantity of spices and/or flavourings used in the preparations in line with the first aspect of the application is at least 0% and at most 15%.

The liquid, viscous or dry, rehydratable preparation can also contain fibre. These can be selected (as a combination) from the following non-exhaustive list: oligofructose, inulin, fructooligosaccharides, psyllium fibre, pectin, gums, mucilage, polysaccharides from algae and seaweeds, galacto-oligosaccharides, arabinoxylan oligosaccharides, resistant starch.

The protein content of the liquid, viscous or dry rehydratable preparation in line with the first aspect of the current application is at least 5%, preferably at least 10%, such as for example at least 15% or at least 20%. The protein content of the liquid preparation is typically no more than 35%, such as no more than 30% or no more than 25% or no more than 22%.

The liquid, viscous or dry, rehydratable preparations in line with the first aspect of the current application contain typically less than 10% (w/w) lyophilised material of edible insect larvae, such as for example less than 5% (w/w) lyophilised material of edible insect larvae or less than 2% (w/w) lyophilised material of edible insect larvae. The percentage of lyophilised material of edible insect larvae in the preparation of the current application is preferably less than 1% (w/w). The lyophilised material of edible insect larvae is preferably not present in the preparation of the current application.

A second aspect of the current application concerns the use of the liquid, viscous or dry, rehydratable preparation of the first aspect for the preparation of insect-based feed and/or food products, whereby this liquid, viscous or dry, rehydratable preparation is coagulated. This coagulation is done preferably by heating or by friction (for example extrusion) or by a combination of these two processes.

In a first embodiment of the second aspect of this application the coagulation of the stated liquid, viscous or dry, rehydratable preparation is done by means of baking this preparation on a flat sheet (baking sheet) with frequent stirring to form a granular preparation with the appearance of fried minced meat (from chicken, turkey, pork, veal or beef) whereby the grains of the granular preparation have a size (expressed in volume, mm3 , of the grains) ranging from 85 mm3 to 850 mm3. The grain size of the granular preparation in line with the first embodiment of the second aspect of this application is at least 85 mm3 , preferably at least 160 mm3 , such as for example at least 280 mm3 , or at least 450 mm3 . Furthermore, the grain size is preferably no bigger than 3000 mm3 , preferably no bigger than 2500 mm3 , such as for example no bigger than 2000 mm3 , no bigger than 1600 mm3 , no bigger than 1200 mm3 , no bigger than 1000 mm3 or no bigger than 850 mm3 .

The moisture content of the granular preparation obtained in line with the current application is at least 50%, preferably at least 55%, such as for example at least 60%, at least 65%, or at least 70%. The moisture content of the obtained granular preparation is preferably not more than 85%, such as not more than 80% or not more than 75%.

The protein content of the liquid, viscous or dry rehydratable preparation in line with the first aspect of the current application is at least 5%, preferably at least 10%, such as for example at least 15% or at least 20%. The protein content of the liquid preparation is typically no more than 35%, such as no more than 30% or no more than 25% or no more than 22%.

The granular preparations obtained in line with the current application contain less than 10% (w/w) lyophilised material of edible insect larvae, such as for example less than 5% (w/w) lyophilised material of edible insect larvae or less than 2% (w/w) lyophilised material of edible insect larvae. The percentage of lyophilised material of edible insect larvae in the preparation of the current application is preferably less than 1% (w/w). The lyophilised material of edible insect larvae is preferably not present in the preparation of the current application.

This granular preparation can then be used as a substitute for minced meat, in tomato-based preparations such as spaghetti sauce, lasagne and pizza, pitta bread filling and vegetable filling such as peppers.

In a second embodiment of the second aspect of this application the coagulation of the liquid preparation of the first aspect occurs by means of baking on a flat sheet whereby stirring during cooking is minimal to non-existent. If, with this kind of cooking of the stated liquid preparation, the liquid preparation can spread, a product is typically obtained with the appearance of a pancake. The thickness of such pancake-type preparations is typically no more than 10 mm, for example no more than 5 or 3 mm. Such pancake-type preparations are preferably baked on both sides, e.g. by turning the pancake-type product while cooking. On the other hand, when during such a method of baking the spreading of the stated liquid preparation is limited, for example by using an open baking form, such as a baking ring, a product can be obtained with the appearance of a hamburger. The thickness of such hamburger-type preparations is typically between 1 cm and 8 cm, for example between 2 cm and 6 cm. Such hamburger-type preparations are preferably baked on both sides, e.g. by turning the hamburger while cooking.

In a third embodiment of the second aspect of this application the coagulation of the liquid preparation of the first aspect occurs by heating in a baking form in an oven to form a meatloaf-type feed and/or food product.

In a fourth embodiment of the second aspect of this application the coagulation of the liquid preparation of the first aspect occurs by cooking in a sealed casing to form a Sausage-type feed and/or food product. This Sausage can also be converted into cubes or stir-fry strips.

The moisture content of the hamburger-, pancake- and Sausage-type preparations obtained in line with the current application is at least 50%, preferably at least 55%, such as for example at least 60%, at least 65%, or at least 70%. The moisture content of the hamburger-, pancake- and Sausage-type preparations is preferably not more than 85%, such as not more than 80% or not more than 75%.

The protein content of the hamburger-, pancake- and Sausage-type preparations obtained in line with the current application is at least 10%, preferably at least 15%, such as for example at least 18%. The protein content of the obtained granular preparation is typically no more than 35%, such as no more than 30% or no more than 25% or no more than 22%.

The hamburger-, pancake- and Sausage-type preparations obtained in line with the current application contain less than 10% (w/w) lyophilised material of edible insect larvae, such as for example less than 5% (w/w) lyophilised material of edible insect larvae or less than 2% (w/w) lyophilised material of edible insect larvae. The percentage of lyophilised material of edible insect larvae in the preparation of the current application is preferably less than 1% (w/w). The lyophilised material of edible insect larvae is preferably not present in the preparation of the current application.

A third aspect of this application concerns a method for making a liquid preparation of edible insect larvae whereby edible insect larvae are homogenized. Binding agents are added to these homogenized edible insect larvae in a ratio of 1 to 30 gram binding agent on dry matter basis per 100 gram dead homogenised edible insect larvae (wet weight).

In line with the method of the current application, the binding agents are typically selected from the following non-exhaustive list of binding agents: vegetable proteins, animal proteins and starch (e.g. potato starch, corn starch, rice starch, tapioca starch, wheat starch) or a combination of the stated binding agents. Egg protein or egg protein and potato starch or egg protein and corn starch or egg protein and breadcrumbs or egg protein and chickpea flour proved to be very suitable for producing the stated liquid, viscous or dry, rehydratable preparation of the current application. Egg protein or egg protein and potato starch proved particularly suitable for producing the stated liquid, viscous or dry, rehydratable preparation of the current application. When egg protein is added as a binding agent, dried egg protein is preferred, dissolved beforehand in water. The egg protein is preferably dissolved by adding 10 parts water to 1 part egg protein powder, preferably maximum 9 parts water, such as for example maximum 8 parts, maximum 7 parts, maximum 6 parts, maximum 5 parts or maximum 4 parts. Furthermore, the dried egg protein is dissolved in at least 2 parts water, preferably at least 3 parts water. A binding agent is preferably used consisting of a birds' egg protein such as chicken egg protein. Moreover, the binding agent used is preferably made from a combination of a starch, preferably potato starch, and a protein, preferably egg protein. The ratio of potato starch/egg protein used can vary on a weight basis (dry weight) between 1/1 and 1/20, for example between 1/5 and 1/15 or between 1/8 and 1/12.

In line with the method of the present application at least 5 g, preferably at least 7 g such as, at least 9 g, at least 11 g or at least 13 g binding agent (dry matter) per 100 gram homogenised dead edible insect larvae (wet weight) is used. In addition, preferably no more than 30 g, for example no more than 25 g, such as no more than 20 g or no more than 18 g, or no more than 17 g or no more than 15 g binding agent (dry matter) is added per 100 gram homogenised dead edible insect larvae (wet weight).

The method in line with the current application also includes the optional addition of spices and/or flavourings. These can be selected (as a combination) from the following non-exhaustive list: salt, pepper, nutmeg, paprika powder, onions, ginger, coriander, garlic, chili, thyme, basil, oregano, mustard, marjoram, rosemary, clove, cumin, parsley, cocoa, cinnamon, caraway seed, turmeric, celery powder. The quantity of spices and/or flavourings used in the preparations in line with the third aspect of the application is minimum 0% and maximum 15%. The method in line with the current application also includes the optional addition of fibre. This fibre can be selected (as a combination) from the following non-exhaustive list: oligofructose, inulin, fructooligosaccharides, psyllium fibre, pectin, gums, mucilage, polysaccharides from algae and seaweeds, galacto-oligosaccharides, arabinoxylan oligosaccharides, resistant starch.

The insect larvae are preferably killed before homogenization. The insect larvae can be killed by means of heating such as blanching or steaming and/or by means of freezing. If the insect larvae are killed by steaming, then the insect larvae are steamed for a maximum 10 minutes, preferably maximum 8 minutes, such as for example maximum 6 minutes, maximum 5 minutes, maximum 4 minutes or maximum 3 minutes. If the insect larvae are killed by blanching, then the insect larvae are heated in boiling water for a maximum of 5 minutes, such as for example a maximum 2 minutes, maximum 1 minute, maximum 40 seconds or maximum 20 seconds. The insect larvae can be killed via non-heat-based techniques such as via the administration of pulsating electric fields and/or the administration of electric shocks and/or application of high hydrostatic pressure. The dead edible insect larvae can be homogenised in various ways, for example using blenders such as a microcutter and bowl chopper, which can also be used in combination. For example, the dead edible insect larvae can first be roughly homogenized with the bowl chopper and then more finely homogenized with the microcutter.

Typically 35 gram to 95 gram water, including the water used for dissolving or diluting the binding agent, per 100 gram dead homogenised edible insect larvae, is mixed in.

The mixing of the above-described ingredients can be done in a recipient. Typically, the mixing of the above-described ingredients is done using a mixing system such as a mixer or bowl chopper.

Typically, when implementing the method of the current application, the edible larvae are selected from the following species: morio worms, mealworms, lesser mealworms, the wax moth caterpillar, the caterpillar of the silk moth. The edible insect larvae are homogenized using a microcutter and/or bowl chopper, preferably after being killed. Furthermore, a protein, preferably egg protein, or an egg protein and a starch, preferably potato starch, are added to the preparation as a binding agent. A quantity of spices can be added, ranging from 0% to 15%. All ingredients are mixed using a mixing system, such as for example a bowl chopper.

In an additional embodiment of the method of the third aspect of the application the liquid preparation in line with the first aspect of the application is then baked on a baking sheet, whereby the temperature of the baking sheet is maximum 120°C, preferably maximum 110°C, such as for example 105°C, maximum 100°C, maximum 95°C or maximum 90°C with frequent mixing and/or stirring of the mixture until it has the appearance of fried minced meat.

In a specific embodiment of the method of the current application, first the edible insect larvae are steamed, then these dead edible insect larvae are homogenised in a bowl chopper (Type UM12A, Stephan) into a liquid mixture to which spices and binding agent are added with continuous stirring; this liquid mixture is then transferred, preferably by means of a pump system, to a stir-fry system such as Type cucimix 30 (Firex) to be cooked while being continuously mixed.

In a second additional embodiment of the third aspect of the application the liquid preparation is baked in an oven in a baking form to produce a meatloaf-type feed and/or food product.

In a third additional embodiment of the third aspect of the application the liquid preparation is placed in a sealed casing and then cooked, to form a feed and/or food product whose form is determined by the form of the sealed casing, such as for example a Sausage.

In a fourth additional embodiment of the third aspect of the application the liquid preparation is baked on a flat baking sheet or pan without stirring to form a pancake.

On an industrial scale the insect larvae are killed by heating such as for example by steaming in for example a screw cooker or a belt cooker or by means of blanching in a deluge belt blancher, a screw blancher or a belt blancher. The dead insect larvae can, for example, be pumped over using a product pump to a recipient where the dead insect larvae are homogenized using for example meat grinders. Spices and/or flavourings and/or colourings and/or binding agents can be added during or after the homogenization. When the spices and/or flavourings and/or binding agents are added after homogenization an extra mixing step needs to be carried out. Then the mixture obtained is cooked under continuous stirring, for example in the Firex braising mixer, to form a granular preparation with the appearance of minced meat. The obtained mixture can also be placed in an open baking form and baked in an oven such as the Gernal cooking cabinet, to form a meatloaf-type product. The obtained mixture can also be placed in a sealed casing such as a synthetic casing and then cooked, to form a Sausage-type product. The obtained mixture can also be baked on a flat baking sheet to form a pancake or to form a hamburger if the obtained mixture is baked in a baking ring on the flat baking sheet or in a pan.

An embodiment of the current application also includes the industrial upscalable methods of homogenisation of insect larvae product by blending the insect larvae and then forcing them under high pressure through tiny holes. Extruders and hammer mills or colloid mills (for the solid parts) can also be used for homogenising the insect larvae mass. In a specific embodiment of the current application the insect larvae mass can be subject to intensive homogenisation, with pressures up to 35,000 psi. A specific embodiment of the current application is a liquid, viscous or dry, rehydratable preparation of an insect larvae mass with hydrophilic protein, such as a birds' egg protein such as chicken egg protein, ovomucin, ovoglobulin, ovoalbumin, casein, vegetable proteins or gelatin and a Farrall index ranging from 5 to 7. A proven advantage of such a homogenisation process is that there are no differences in taste or fat concentration in the food end-product. The disadvantage is that homogenised insect larvae product is difficult to convert into wet solid feed and/or food products or into hierarchically structured wet food products with an acceptable organoleptic quality and in solid meat and/or fish substitute preparations and feed and/or food products such as hamburgers, minced meat and Sausages very similar to the original meat or fish product.

### EXAMPLES

### EXAMPLE 1

Pre-treatment of mealworms. Living mealworms suitable for human consumption were killed by blanching them for two minutes. Thereafter they were divided into portions of five hundred gram and frozen at - 18 °C. At the beginning of every experiment, a portion of 500 g was thawed. The mealworms were homogenised with a stick blender for 5 minutes. The homogenized mealworms were then divided into portions of 50 g. The experiments were then performed on these smaller portions to find suitable binding agents and investigate the impact of other additives such as spices and if necessary other ingredients. The binding agents that were tested include arrowroot (Vajra), buckwheat flour (Vajra), breadcrumbs (Everyday, Colruyt Group), corn starch (Marc Payot, Colruyt Group), locust bean gum (Nutricia), chickpea flour (Markal), rehydrated chicken protein, alginate powder in combination with CaSO4 , guar gum (CERTA n.v.) and xanthan gum (ABC Chemicals). Rehydrated protein was obtained by dissolving protein powder (Cocovite - per 100g 1600 kj, 368 kcal, 〉78g proteins, 〈 0.1 g carbohydrates and 38 g fat) in a quantity of water.

Preparation of mince. The first step in the preparation was the weighing of 50 g homogenized mealworms and the weighing of a quantity of binding agent. The weighing was done with scales (Acculab Atilon ATL-2202-I, Sartorius Group) which weigh accurately to two decimal figures. For locust bean gum the measuring spoon in the package was used. One level measuring spoon equals 1.7 g. Thereafter these two components were well mixed to form a homogeneous mass. The second step involved heating this mixture in boiling or hot water for 2 to 5 minutes. During the heating a fork was stirred through the water to ensure that tiny pieces were formed instead of one big chunk. After the time had elapsed, the pieces were taken from the water with a skimmer and placed on a plate in order to allow the excess fluid to flow out. The fourth and final step was cooking in the pan. A small amount of olive oil was added to an anti-stick pan and heated. When the olive oil was hot, the pieces of minced product were added and cooked. Depending on the binding agent used, the minced product was cooked for 5 to 10 minutes. Subsequently, the minced product was put on a plate, tasted and evaluated.

The parameters evaluated and the criteria used are shown in Table 3. The parameters are determined by the researcher and represent the properties that were evaluated during the research into suitable binding agents. The established criteria satisfy the expectations when a piece of meat is tasted. These parameters and criteria are converted into scores. Each score corresponds to a description (Tabel 4). These descriptions are compiled on the basis of the researcher's observations. The results are processed on the basis of these scores.Table 3: Parameters and criteria that are used for evaluating the binding agents. Binding/cohesion Small pieces must be formed with good cohesion Firmness The pieces must be firm and should not fall apart. It should be possible to chew on them. Mouth feel The pieces should have a pleasant mouth feel. They should not leave a sticky after-feel.Table 4: Scores with accompanying description 1 No cohesion, no binding 2 Light cohesion but very mushy 3 Outside slightly crunchy, inside mushy 4 Outside crunchy, inside still soft but no longer mushy 5 Outside crunchy, sticky in the mouth 6 Outside crunchy, less sticky in the mouth 7 Good cohesion, no longer sticky in the mouth 8 Too dry, flouryTable 5: Weighed quantities of binding agents and combinations of binding agents (the different weighed quantities are divided by a "/"; when 2 binding agents are used in combination, the weighed quantities are noted in the sequence in which they are described in the first column). Rehydrated egg protein (Cocovite)3/ 6/ 9/ 16/ 18+ Chickpea flour11+3/11+6/ 11+8/ 11+10/ 16+10/ 20+8+ Breadcrumbs+ Corn starch (Marc Payot, Colruyt Group)11+4/ 11+6/ 11+8/ 15+411₊6/ 11+8/ 10+5+ Chickpea flour + Breadcrumbs16+8+4/ 16+4+4Chickpea flour (Markal)2/ 4/ 10/ 13Locust bean gum (Nutricia)1.7/2.55/3.4Breadcrumbs (Everyday, Colruyt Group)6/ 11/ 15Buckwheat flour (Vajra)1/ 2/ 5/ 10Arrowroot (Vajra)3/ 4/ 5/ 8Guar gum (CERTA n.v.)0.1/ 0.2/ 0.3Xanthan gum (ABC Chemicals)0.1/ 0.2/ 0.3/ 0.4/ 0.5+ Guar gum0.1+0.4/ 0.15+0.65+ Locust bean gum0.3+0.2/ 0.48+0.32+ Breadcrumbs + Guar gum0.2+0.8+8+Breadcrumbs + locust bean gum0.3+0.2+6Alginate + CaSO4 0.12+0.05/ 0.25+0.10/ 0.38+0.2/ 0.50+0.25/ 0.75+0.5/ 0.75+0.6

Research into suitable moisture content. After homogenization the mealworms, a kind of paste is obtained. For the research into binding agents an attempt was made to obtain the best possible consistency and moisture content in the minced product. During the research into binding agents and moisture content, it was discovered that a fibrous mouth feel was an effect that could be avoided by putting the homogenized mealworms though a puree sieve. The fibres produce an unpleasant feel in the mouth. It is the membranes from the chitin in the mealworm exoskeletons that cause the unpleasant mouth feel. These membranes remain stuck between the teeth and in the mouth after chewing. The quantity of membranes was for example considerably reduced when the homogenized mealworms were put through a puree sieve for about 20 minutes. This time can be increased or decreased, depending on the number of mealworms. In the example in question, portions of 500 g mealworms were processed. The use of the puree sieve was a time-consuming process. Homogenisation of insect larvae mass though hammer mills or colloid mills (for the solid parts) and very intensive homogenisation up to 35,000 psi, can prevent the problem of membranes. An insect larvae mass with a Farrall index ranging from 5 to 7 does not produce an adverse membranous mouth feel.

Research into suitable binding agents. A first step in the research was to search for suitable binding agents. For this purpose, nine different binding agents were added separately to 50 g freshly homogenized mealworms. Thereafter, combinations were also made whereby several binding agents were used to find out if these produced a better result.

Results from the research with one binding agent added at a time were as follows (score: 1 = no cohesion, no binding; 2 = slight binding but very mushy; 3 = outside slightly crunchy, inside mushy; 4 = outside crunchy, still soft inside but no longer very mushy; 5 = outside crunchy, sticky in the mouth; 6 = outside crunchy, slightly less sticky, already more dry; 7 = good cohesion, no longer sticky in the mouth; 8 = too dry, floury):
- Rehydrated egg protein in g/50 g homogenised mealworm gave the following scores: score 2 for 3 g/50g; score 4 for 6g/50 g, score 5 for 9g/50 g, score 5 for 16 g/50g and score 6 for 18 g/50g.

Chickpea flour in g/50 g homogenised mealworm gave the following scores: score 1 in 2 g/50g; score 4 in 4g/50 g, score 5 in 10g/50 g, score 5 in 13 g/50g.

Locust bean paste in g/50 g homogenised mealworm gave the following scores: score 4 in 1 g/50g; score 5 in 2g/50 g and score 5 in 3g/50 g.

Breadcrumbs in g/50 g homogenised mealworm gave the following scores: score 3 in 6 g/50g, score 4 in 11 g/50 g and score 5 in 15g/50 g.

Buckwheat flour in g/50 g homogenised mealworm gave the following scores: 3 in 1 g/50 g, score 3 in 2 g/50 g, score 4 in 5 g/50 g and score 5 in 10 g/50 g.

Arrowroot in g/50 g homogenised mealworm gave the following scores: score 2 in 3 g/50g, score 3 in 4g/50 g, score 5 in 5g/50 g and score 5 in 8 g/50g.

The addition of rehydrated egg protein gave the best results. The pieces were less soft and had better cohesion the more was added. The highest quantity of rehydrated egg protein added was 18 g. The decision to stop here and not add higher quantities is based on observations. The difference between 9 g and 18 g was not big. The results with chickpea flour were disappointing. Small quantities did not instantly produce good cohesion and the product remained moist inside. On the basis of the observations the steps within which the quantities were increased were raised. With 10 g and 13 g chickpea flour in combination with 50 g mealworm paste, the whole mixture was already a little less mushy inside but the flavour of the chickpea flour became overwhelming. The floury taste was perceived as negative. A third binding agent included in the research is locust bean gum. The pieces were all still quite soft inside. To make the pieces a little drier and less soft, they were cooked in a pan with olive oil. Each time there was not much difference compared to before cooking. The pieces remained quite soft inside and did not have the desired firmness similar to a vegetarian minced product. The addition of more locust bean gum made no difference. In this research breadcrumbs were also investigated as a better binding agent with mealworm paste, to obtain a solid product like fine mince. Initially the same problem was encountered as above with the other binding agents. The pieces remained too soft inside. At the end they were also quite soft inside and the mince stuck inside the mouth, which is not a pleasant experience. The taste of the breadcrumbs began to be more and more prominent. With 15 g breadcrumbs the taste of bread was very dominant. However, the aim is to develop minced mealworm and not minced bread. If more breadcrumbs had been added, the taste of the mealworms would have been completely overpowered and the product would have been more like bread. Therefore, the quantity was not increased. When investigating buckwheat flour as a good binding agent for the mealworm mince, the method for the other binding agents was first carried out. This test showed that when the mixture of homogenized mealworms is first heated with the buckwheat flour in boiling water, it completely falls apart. So for the following tests with buckwheat flour this step was adapted and the entire mixture was cooked in the pan immediately after mixing. The result after cooking was unexpected. The pieces remained quite soft and even mushy inside. A slightly crunchy layer did form, but only on the outside. It was concluded from the observations that the added quantities could be increased in greater steps. By adding more buckwheat flour there was a slight improvement, but it remained sticky. The inside seemed to be uncooked. Buckwheat flour is also a type of flour which when added in large quantities runs the risk of giving the whole mixture a too floury taste. Buckwheat flour is suitable for all kinds of baking but appears to be less suitable for minced products.

When added in small quantities, arrowroot appeared to make everything fall apart when heated. With quantities above 4 gram, small pieces formed. The cooking process extracted the moisture from the pieces. The result after cooking was however disappointing. The pieces felt quite slimy and sticky. The more arrowroot used, the more slimy the result. This produced an unpleasant mouth feel and is not desirable in this product. Adding more arrowroot powder to obtain better cohesion was therefore not an option.

The addition of xanthan gum with salt did not produce good results. In low quantities there was little evidence of cohesion. The whole mixture fell apart. The quantity of xanthan gum and salt was systematically increased but the effect reached a ceiling at this point. The pieces were crunchy on the outside but still very soft on the inside. The quantity of xanthan gum normally used in the food industry (0.05 to 0.2%) had already been far exceeded. The addition of xanthan gum and salt alone is therefore not sufficient to obtain good cohesion.

The addition of guar gum was also quite ineffective. Initially there was no cohesion and with 0.3 g there was only a slight improvement. Normally, only concentrations of 0.3% are used. These were already exceeded here. The addition of guar gum alone does not produce the desired result.

A final binding agent investigated was alginate in combination with CaSO4 . At the lowest concentrations of 0.25% and 0.50%, the alginate still didn't bind the mixture. At increasing concentrations, the binding improved systematically. When the quantity of CaSO4 was then increased, the moisture content improved slightly but there was still a sticky feeling in the mouth. Alginate was not a good choice for the mealworm mince.

When the binding agents were each added separately, the protein powder produced the best results. Trials were also carried out with combinations of egg white and other binding agents.For instance, the combination of rehydrated egg white and chickpea flour was tried. Both the quantity of rehydrated egg white and the quantity of chickpea flour was gradually increased. The best results were obtained with 16 g and 20 g rehydrated egg white and 8 g chickpea flour (Markal - per 100 g: Egg white 18.6, Carbs 44.3, Fat 5.9 and Fibre 15.5). The chickpea flour gave the product a defined, floury taste, which was too overpowering. At lower concentrations, the taste was less noticeable but then the minced product was still sticky in the mouth, which is also undesirable. This combination is therefore less suitable for the minced mealworm. With the combination of breadcrumbs and rehydrated egg white, fewer breadcrumbs are needed to obtain good results. The best results were obtained with 11 g rehydrated egg white and 6 to 8 g breadcrumbs.Since corn starch is gluten-free but has the same application as breadcrumbs which contain gluten, the combination of egg white powder and corn starch was also investigated. With 6 g corn starch and 11 g rehydrated egg white, there was more moisture inside than with the corresponding amount of breadcrumbs. The best results were obtained with 8 g corn starch and 11 g rehydrated egg white. This combination is a good combination.

Another combination investigated was rehydrated egg white in combination with chickpea flour and breadcrumbs. However, the taste of chickpea flour was too overpowering. By adding breadcrumbs the taste of the chickpea flour was slightly masked but still present. The floury taste is not very pleasant in the mouth. Therefore, this combination is less suitable for achieving a mealworm mince taste that consumers will like.

Xanthan gum is a binding agent that is often used in combination with guar gum or locust bean gum. These combinations are supposed to work in synergy. Following tests, neither combination seemed to have much more of an effect than when used separately. The mixture remained very soft and moist inside.

Many different binding agents were tested for the binding process. These results show that the combination of rehydrated egg white with breadcrumbs and corn starch as binding agent in a homogenised wet insect larvae matrix or in a dry finely homogenized or dry powdery insect larvae matrix are a good binding agent for the transformation with physical treatment to a wet solid food and/or feed product or into a hierarchically structured wet food product. Binding agents such as alginate, guar gum and xanthan gum gave less positive results in this research. Various spices were also tested for the flavourings. The results also show that the mechanical removal of membranes from the insect larvae paste or the insect larvae homogenate, for example with a puree sieve, improves the wet solid food and/or feed product, e.g. the minced insect product.

### EXAMPLE 2

A specific embodiment of the application concerns the composition of a liquid premix preparation comprising homogenised insect larvae and an edible protein solution or suspension, possibly starting with a protein powder such as egg protein (whether or not in combination with potato starch, in combination with corn starch, or in combination with chickpea flour, or in combination with breadcrumbs) as a specific added binding agent. It is a challenge to find a suitable composition starting with a homogenised insect larvae mass or insect larvae powder and then preparing it for physical transformation of this homogenised insect larvae into an edible solid or an edible hierarchically structured food product with an acceptable structural and organoleptic quality. As described above, various compositions were evaluated following different methods of preparation for structural and organoleptic quality. Other parameters were also examined. For example, tests were carried out to see if blanching was as good as the original steaming step for killing the insects and if this had an effect on the taste and texture of the end-product (mince). In addition, the effect of freezing the dead insects on taste and texture was measured. Moreover, the ratio protein powder/water was varied and the effect of this variation on the texture was checked. All prepared minced products were also frozen and then heated up, sometimes in tomato sauce, to see if the texture and taste was retained.

Effect of preparation method on mince. In the first step the living insects (larvae ofTenebrio molitor) were killed. In order to obtain an end-product with a good mouth feel and therefore the complete absence of membranes, a good mix/blix step is essential. For this reason a blix step of 5 minutes was included in the procedure. After homogenization, a liquid paste was obtained, which thickened after a few minutes in the fridge. After homogenization the correct quantities of spices were added. Per 100 gram homogenized mealworms, the following were added: 1 g potato starch (Anco); 1.5 g salt (Jozo); 0.8 g white pepper (Everyday); 0.8 g freeze-dried onion (Carrefour); 0.6 g nutmeg (Everyday) and 1.2 g paprika powder (Everyday). In addition, 2.6 gram egg white powder (Cocovite) dissolved in water was added to each sample to obtain the desired end-product. After adding the spices and the egg white solution, the whole mixture was cooked in a little (5-6 g) homogenizednut oil (Vandemoortele). The liquid raw mince thickened during the cooking step and by stirring while cooking a mince-like texture was achieved. It was possible to alter the size of the mince grain during the cooking process by stirring more or less intensively. Killing the mealworms. As mentioned earlier, two methods of killing were investigated. On the one hand, fresh (living) mealworms were steamed for 5 minutes. On the other hand, some of the fresh mealworms were blanched for 20 seconds. The insects were killed almost immediately during the blanching step. For the steaming and blanching, the increase in weight was minimal. The initial weight of both tested conditions was 125 gram and after both extermination steps the weight increased to 140 gram. There was however a slight visual difference. After extermination, the blanched mealworms assumed a nicer more intensive colour compare to the steamed mealworms. The method of extermination had no effect on the taste or texture of the freshly prepared mince.

Freezing the dead mealworms. In addition, a second question concerned the effect on the taste or the texture of the mince after freezing the dead insects before they were processed. For this reason 1 sample of insects was frozen and kept at - 18 °C for 24 hours after each of the two killing methods before further processing took place. An interim freezing step was investigated because frozen insects can be transported more easily and a longer shelf-life is also guaranteed. After preparing the mince, the extra freezing step seemed to have no effect on the taste or texture of the freshly prepared mince. There seemed to be no difference between the minces prepared from fresh mealworms or from previously frozen mealworms.

Variation in ratio protein powder/water. The final parameter that was varied was the quantity of water added to the protein powder. In the original recipe, 7 parts water were added to 1 part protein powder. But because this resulted in a mince with a fine grain and relatively soft texture, the amount of added water was varied. As a result, in addition to the condition of 1 part protein powder and 7 parts water, the following ratios were tested: 1/5, 1/4 and 1/3. From the various test conditions it appeared that if less water was added to the protein powder, the texture of the mince was more solid. The best result and a texture similar to minced meat was obtained with a 1/5 and 1/4 ratio.

Effect of freezing minces. All prepared minces were frozen at - 18 °C for 96 hours and then thawed and heated up. The minces were then tested again for taste and texture. The result was that freezing after preparation and reheating had no negative effect on the texture or taste of all the prepared minces. The texture remained the same in all the different conditions. The mince with a protein/water ratio of 1/7 had the softest texture and melted much more quickly in the mouth. This was regarded as too soft. The taste tests also showed that the minces made with a steaming step had a softer texture than the minces made with a blanching step. This difference was greater than with the freshly prepared minces.

### Addition of mince to commercially available spaghetti sauce

The minces were also added to a commercially available spaghetti sauce (prepared without meat). The mince with a protein/water ratio of 1/5, 1/4 and 1/3 retained their texture best in the tomato sauce immediately after the addition. Tomato sauce was added to all minces, which were then stored in a fridge for 24 hours to check the texture retention. The result was that the texture of most minces was nicely retained. As previously mentioned, the texture of the mince with a protein dilution of 1/7 was the softest and fell apart quickest in the tomato sauce after storage. The mince in which the mealworms had first been steamed and then frozen for 24 hours before preparation also retained its texture less well. There was even a little moisture seepage from the mince into the sauce. The best results were obtained with mince made with the blanching step and a protein ratio of 1/3, 1/4 and 1/5.

Experiments showed that there were no noticeable differences in taste and texture between minces with a different method of killing. After heating up the frozen mince, the texture was retained. Experiments showed that even after adding tomato sauce, all minces retained their texture and taste, even after being stored for 24 hours in the fridge. But the minces with a firmer texture (protein ratio of 1/3 and 1/4) were best in the taste tests with spaghetti sauce and retained their structure best in the sauce.

### EXAMPLE 3

The mealworms (larvae ofTenebrio molitor) (1 kg) were killed by steaming in a steam cabinet (Climaplus combi CPC, Rational) at a programmed temperature of 100 °C for 5 minutes. The dead insects were then homogenized with a microcutter (rotating knife with openings of 0.2 mm) (Microcutter 40L, Stephan) and/or a bowl chopper (Type UM12A, Stephan).

The various mixing conditions were:
- 1. 20 minutes mixing in bowl chopper
- 2. 25 minutes mixing in bowl chopper
- 3. 20 minutes mixing in bowl chopper and then with microcutter
- 4. 25 minutes mixing in bowl chopper and then with microcutter

The spices, flavourings, the potato starch and the egg protein dissolved in water were added in the suggested quantities to the homogenized insects. Per 20 gram homogenized insects, the following ingredients were added: 2.6 gram egg protein powder (Cocovite) dissolved in 10.4 gram water; 0.2 gram potato starch (Anco); 0.3 gram salt (Jozo); 0.16 gram white pepper (Topaz); 0.16 gram freeze-dried onion (Carrefour), finely homogenized in a mortar; 0.12 gram nutmeg (Everyday) and 0.24 gram paprika powder (Boni). The mixture of mealworms, spices, potato starch and dissolved protein powder was homogenised in the bowl chopper into a liquid preparation.

The liquid preparation was cooked for 15 minutes on a Firex baking sheet (Cucimix 30, Stephan) whereby the baking temperature was programmed at 100 °C at a stirring speed of approx. 12 rpm.

The taste of the 4 preparations was positively evaluated, though there was a preference concerning mouth feel for preparation 3 and 4.

The nutritional details of the thus prepared insect minces is shown in Table 1.Table 1. Nutritional details of mealworms and lesser mealworms, of the insect mince prepared as described in example 1 (with mealworms) and in example 2 (with lesser mealworms) and of beef/pork mince.Moisture content (g/100 g)62.0 ± 4.666.5664.5 ± 1.066.4363Ash content (g/100 g)2.031.74Protein content (g/100 g)17.85 ± 3.3318.320.6 ± 0.118.217.9Fibre (g/100 g)2.82.10.0Reducing sugars (such as glucose, g/100)〈 0.20.50.0Carbohydrates (g/100 g)3.610.0Sodium content (g/100 g)0.440.380.56Fat content (g/100 g)12.91 ± 2.608.38.5 ± 0.25.812.7Fatty acids Saturated fatty acids (%)20.8319.4124.3235.43 Mono-unsaturated fatty acids (%)23.7750.6434.9837.7 Polyunsaturat ed fatty acids (%)55.4028.9638.2915.75 Omega 3 fatty acids (%)1.041.051.77 Omega 6 fatty acids (%)27.5936.9311.8a Nowak V, Persijn D, Rittenschober D, Charrondiere UR, 2016, Food Chemistry: 193, 39-46 .b Yi L, Lakemond CM, Sagis LM, Eisner-Schadler V, Van Huis A, Van Boekel MA, Food Chemistry 2013, 141: 3341-3348 .c after Nubel, 5th edition, 5th printing.

### EXAMPLE 4

The lesser mealworms (larvae ofAlphitobius diaperinus ) (2 kg) were killed by heating in a Firex heating system Cucimix 30 (for 8 minutes at a base temperature of 130°C). The dead lesser mealworms were then homogenized with a microcutter (rotating knife with openings of 0.2 mm) (Microcutter 40L, Stephan) and/or a bowl chopper (Type UM12A, Stephan).

The various mixing conditions were:
- 1. 10 minutes mixing in bowl chopper
- 2. 15 minutes mixing in bowl chopper
- 3. 15 minutes mixing in bowl chopper and then with microcutter
- 4. Mixing in the microcutter for maximum 1 minute

The spices, breadcrumbs and protein powder dissolved in water were added in the prescribed quantities to the homogenized insects. Per 20 gram homogenized insects, the following ingredients were added: 2.6 gram egg protein powder (Cocovite) dissolved in 10.4 gram water; 0.2 gram potato starch (Anco); 0.3 gram salt (Jozo); 0.16 gram white pepper (Topaz); 0.16 gram freeze-dried onion (Carrefour), finely homogenized in a mortar; 0.12 gram nutmeg (Everyday) and 0.24 gram paprika powder (Boni). The mixture of lesser mealworms, spices and protein powder was homogenised in the bowl chopper before cooking.

The mixture (0.5 kg) was cooked for 9 minutes on a Firex baking sheet (Cucimix 30, Stephan) whereby the temperature was set at 125°C at a stirring speed of approx. 12 rpm (whereby during the first 20 to 30 seconds there was no stirring, followed by continuous stirring).

The taste of the 4 preparations was positively evaluated, though there was a preference concerning mouth feel for preparation 3 and 4.

The nutritional details of the thus prepared mince are shown in Table 1.

### EXAMPLE 5

The mealworms (larvae ofTenebrio molitor) were blanched for 20 seconds. After the blanching step, the insects were cooled in cold tap water for 1 minute. After homogenization for 5 minutes, a mixture was obtained to which the spices and flavourings were added. Per 100 gram homogenized mealworms the following were added: 1.0 gram potato starch, 1.5 g salt, 0.8 gram white pepper, 0.8 gram freeze-dried onion, 0.6 gram nutmeg, 1.2 gram paprika powder and 13 gram egg protein powder dissolved in 52 gram water. The result was a liquid preparation.

This liquid preparation was ideal for making a pancake. A pancake was very easy to obtain by spreading the batter thinly in a pan and cooking it in homogenizednut oil without stirring with a fork. When the underside was nicely browned, the pancake was turned over to bake the other side. The baked pancake was soft and could also be rolled up.

### EXAMPLE 6

The mealworms (larvae ofTenebrio molitor ) were blanched for 20 seconds. After the blanching step, the insects were cooled in cold tap water for 1 minute. After homogenization for 5 minutes, a mixture was obtained to which the spices and flavourings were added. Per 100 gram homogenized mealworms the following were added: 1.0 gram potato starch, 1.5 g salt, 0.8 gram white pepper, 0.8 gram freeze-dried onion, 0.6 gram nutmeg, 1.2 gram paprika powder and 13 gram egg protein powder dissolved in 52 gram water. The result was a liquid preparation.

Hamburgers were produced by using the baking rings. For this purpose a small quantity of homogenizednut oil was poured into a hot pan, whereafter the liquid preparation was poured into a baking ring on a flat sheet and then cooked over a low heat. When the underside was cooked, the rings were removed and the hamburgers were turned over to cook the other side.

### EXAMPLE 7

The mealworms (larvae of Tenebrio molitor) were blanched for 20 seconds. After the blanching step, the insects were cooled in cold tap water for 1 minute. After homogenization for 5 minutes, a mixture was obtained to which the spices and flavourings were added. Per 100 gram homogenized mealworms the following were added: 1.0 gram potato starch, 1.5 g salt, 0.8 gram white pepper, 0.8 gram freeze-dried onion, 0.6 gram nutmeg, 1.2 gram paprika powder and 13 gram egg protein powder dissolved in 52 gram water. The result was a liquid preparation.

100 gram of the liquid preparation was put in a silicon form and baked for 14 minutes in a preheated fan oven at 180°C. The texture was very fine. The baked meatloaf-type feed and/or food product could easily be sliced into thin or thicker slices.

### EXAMPLE 8

The mealworms (larvae of Tenebrio molitor) were blanched for 20 seconds. After the blanching step, the insects were cooled in cold tap water for 1 minute. After homogenization for 5 minutes, a mixture was obtained to which the spices and flavourings were added. Per 100 gram homogenized mealworms the following were added: 1.0 gram potato starch, 1.5 g salt, 0.8 gram white pepper, 0.8 gram freeze-dried onion, 0.6 gram nutmeg, 1.2 gram paprika powder and 13 gram egg protein powder dissolved in 52 gram water. The result was a liquid preparation.

164 gram of the liquid preparation was placed in a cooking/deep freeze bag for 16 minutes in boiling water. The obtained product (Sausage-type feed and/or food product) was very fine in texture and had a pleasant taste. This product can be sliced.

### EXAMPLE 9

The mealworms (larvae of Tenebrio molitor) were steamed for 5 seconds. After the steaming step, the insects were cooled in cold tap water for 1 minute. After homogenization for 5 minutes, a mixture was obtained to which the spices were added. Per 100 gram homogenized mealworms the following were added: 1.0 gram potato starch, 1.5 g salt, 1.2 gram white pepper, 0.8 gram freeze-dried onion, 0.6 gram nutmeg, 1.2 gram paprika powder and 13 gram egg protein powder dissolved in 91.0 gram water. The result was a liquid preparation. This liquid preparation was cooked for 2 minutes with continuous stirring to form a granular preparation with the appearance of fried minced meat. 40 gram of this granular preparation was placed in a plastic bag (PA/EVOH/PA/PE, 10 cm × 26 cm, thickness 80 µm, Euralpack) and stored in a gas mixture consisting of 60% CO2 and 40% N2 . The ratio between the volume of the gas and the volume of the product was 2:1. The gas permeability of the bags was ( 2.7, 〈 6.5 and ( 0.21 cm3 /m2 .day.atm at 23°C and 0% relative humidity for respectively O2 , CO2 and N2 . The permeability for water vapour was ( 1.8 g/m2 .day at 23°C. The granular preparation was packed using a vacuum chamber packing machine (C200, Multivac). Vacuum compensation was used in order to replace the air in the plastic bags with the gas mixture. The packed samples were kept in a Miele fridge (set at 4°C). The total aerobic germ count and aerobic bacterial spores were determined according to ISO standards for microbial analyses of feed and/or food products (Dijk et al., 2007). A sample of 10 gram was taken from each plastic bag and placed aseptically in a sterile Stomacher bag, to which 90 ml of a sterile physiological salt solution was added. The mixture was then mixed for 90 seconds. In order to measure the total aerobic germ count, a 10-fold dilution series on PCA agar plates was plated out and incubated for 72 hours at 22 °C. The bacterial spores were measured by heat-treating the 10-1 dilution (10 minutes at 80°C) and then plating out on PCA and incubating at 30°C for 24 hours. The results are shown as log cfu/g in Table 2.

The results in Table 2 indicate that the granular preparation with the appearance of fried minced meat can be kept in 60% CO2 and 40% N2 for 35 days at 4°C. The total aerobic germ count and the number of aerobic traces remained at 35 days under the value of log 7 cfu/g, a value which is used to show that feed and/or food products are spoiled (respectively 4.1 ± 3.1 and 0.8 ± 0.6).Table 2. Germ counts (log cfu/g) during cold storage of the granular preparation of mealworms, kept in 60% CO2and 40% N2.Total aerobic germ count1.4 ±1.6*aA 0.8 ± 0.3*aA 2.1 ± 2.8*aA 0.8 ± 0.5*aA 1.0 ± 0.6*aA 4.1 ± 3.1 *aA Bacterial spores0.7 ± 0.3*aA 1.0 ± 0.5 *aAB0.7 ± 0.3*aA 0.9 ± 0.4*aA 1.0 ± 0.0aA 0.8 ± 0.6*aA Results are the average of 3 repetitions ± standard deviation;*At least 1 sample showed a value under the detection limit (1.0 log cfu/g) In order to calculate the average and standard deviation, a value of 0.5 log cfu/g was used for those samples with a microbial load under the detection limit;a, b, c Averages with the same superscript within the same row do not differ significantly (p 〉 0.05)A, B, C Averages with the same superscript within the same column do not differ significantly (p 〉 0.05)

### EXAMPLE 10

Colour readings of mince. The colour readings were carried out on samples of the mince on the basis of mealworms and on the Sausage made from mealworm paste. As a reference loosely cooked mixed mince (75% pork/15% beef) was used and a traditional meatloaf of 0.5 cm thickness from the delicatessen counter of the Alma (Carrefour, Geel). The colour readings were carried out using a spectrophotometer (Konica Minolta CR-5, Japan). A portion of 35-40 g mince for each test was put in a petri dish and pressed down with the lid so that as few holes as possible were present for light to get through. A round disc of the Sausage and the meatloaf of ± 5 cm diameter and 0.5 cm thickness was placed on the petri dish for the reading. The reading occurred with the measurement aperture of 30 mm and using a petri dish that had been calibrated. The specular component was not taken into account (SCE = specular component excluded). In other words, the diffuse reflection not the specular reflection was measured. This method gives a colour evaluation that matches most closely with that of the observer.

The readings were carried out in triplicate. Using the L*, a* and b* values, it was possible to calculate a browning index (BI) and saturation (C*). BI = 100 × X - 0.31 0.17 met X = a * + 1.75 L * a * 5.645 L * + a * - 3.012 b * C * = a * 2 + b * 2

A difference value in relation to the reference was also calculated for all parameters (L*, a*, b*, BI and C*). A colour difference can also be included in a parameter, namely ΔE*. Δ E * = Δ L * 2 + Δ a * 2 + Δb * 2

The average values of the colour readings are shown in Table 6 T. The browning index of the products on the basis of mealworms is always a lot higher than that of the traditional minced product. There is only a minimum difference in saturation (C*) of the colour.Table 6:Average values ± standard deviation of L*, Minced mealworms 34.16 ± 0.819.17 ± 0.0819.49 ± 0.23100.77 ± 1.8521.54 ± 0.23 Mixed mince 46.41 ± 0.597.79 ± 0.3619.96 ± 0.9767.49 ± 4.7321.43 ± 1.03 Sausage (Mealworms) 49.46 ± 1.227.88 ± 0.2819.40 ± 0.5760.59 ± 0.6720.94 ± 0.63 Meatloaf 58.03 ± 0.2911.52 ± 0.0714.26 ± 0.0242.25 ± 0.2718.34 ± 0.03

In Table 7 the average colour differences of the mealworm products are shown in relation to traditional minced products. The mealworm mince and the Sausage are both darker than the traditional mince. The L* value is smaller. The colour of the mealworm mince also contains more red and somewhat less yellow than the colour of the traditional mince. The reverse is true of the Sausage compared to the meatloaf. The colour of the Sausage is indeed darker but contains less red and more yellow than the colour of the meatloaf. The browning index of both products is higher than that of the traditional mince products. This means that the products made with mealworms have a stronger brown colour than the traditional mince products. The difference in browning index is of such a degree that it is visible. That difference is not just due to the composition; it also has something to do with the method of preparation. Depending on how long the mince is cooked, the colour will be more brown or less brown. In meatloaf there is also a wide range of colour because the composition of the mince may differ as well as the method of preparation (baking/cooking time, method of preparation,...)Table 7: Average colour differences compared to traditional mince and meatloaf Mealworm mince -12,26 ± 0,641,39 ± 0,37-0,47 ± 1,2012,41 ± 0,6933,28 ± 2,88 Sausage -8.57 ± 1,29-3,65 ± 0,215,14 ± 0,5710,70 ± 0,8718,34 ± 0,41

Experiments showed therefore that products made with mealworm paste differ in colour from traditional mince products. The colour of the products made with mealworms is browner and darker. Depending on the type of product there is more or less red and more or less yellow in the colour compared to the colour of traditional products. But the colour differences are not seen as a problem and do not detract from the clear similarity with the traditional mince or meatloaf.

### LEGENDS TO THE FIGURES:

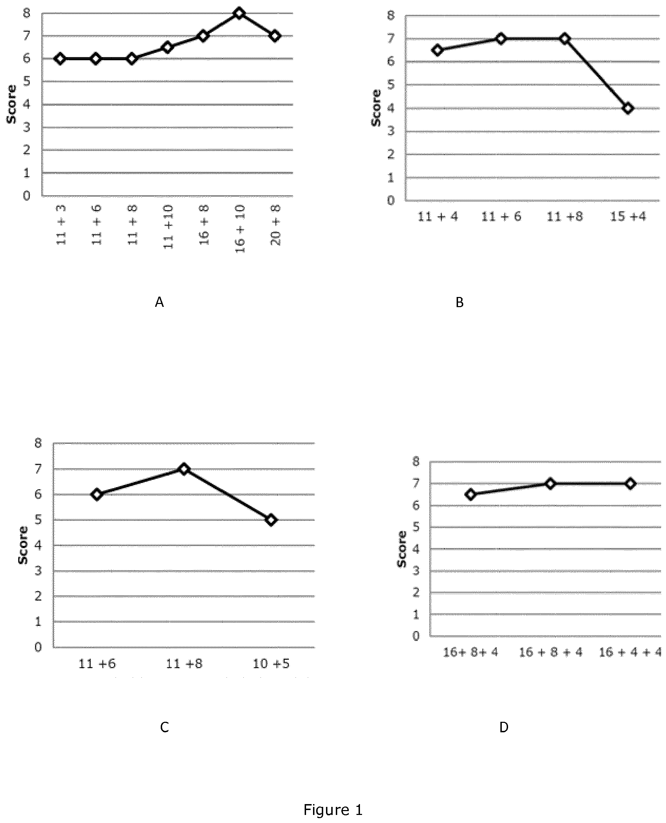

- Figure 1 : Gives the combinations of rehydrated protein powder with other binding agents (Score: 1 = no cohesion, no binding; 2 = slight binding but very flat, mushy; 3 = outside slightly crunchy, inside mushy; 4 = outside crunchy, still soft inside but no longer very mushy; 5 = outside crunchy, sticky in the mouth; 6 = outside crunchy, slightly less sticky, already more dry; 7 = good cohesion, no longer sticky in the mouth; 8 = too dry, floury): The quantity of added binding agent is shown in Figure 1A, 1B and 1C in the form of 'x + y'. In Figure 1D the quantity of added binding agent is shown in the form of 'x+y+z'. In the preparations the binding agent 'x' is always added first, then the binding agent 'y' (and in Figure 1D 'z' as the last binding agent).
- Figure 1A . x = protein powder and y = chickpea flour;
- Figure 1B . x = protein powder and y = breadcrumbs;
- Figure 1C . x = protein powder and y = corn starch;
- Figure 1D . x = protein powder, y = chickpea flour and z = breadcrumbs.

## Claims

1. A liquid, viscous or dry rehydratable preparation comprising homogenised mealworm or lesser mealworm larvae and a chicken egg protein as binding agent whereby the preparation contains 9 to 17 gram dry chicken egg protein per 100 gram wet weight homogenised mealworm or lesser mealworm larvae.

2. The preparation according to claim 1, whereby said preparation comprises larvae in a concentration of between 40% (w/w) and 99% (w/w).

3. The preparation according to claim 1 or 2, which contains potato starch in a ratio of less than 1 to 5 and preferably of less than 1 to 10 of the hydrophilic protein.

4. A solid wet feed and/or food product comprising the preparation according to any one of claims 1 to 3.

5. The solid wet feed and/or food product according to claim 4, which has the appearance of mince, pancake, sausage, hamburger, cubes, stir-fry strips, sausages, or cubes for use in pet food.

6. Use of the solid wet product according to claim 4 or 5 as meat and/or fish substitute in the feed and/or food industry.

7. A method for making a liquid, viscous or dry, rehydratable preparation of mealworm or lesser mealworm larvae comprising the step of homogenisation of said larvae and adding to said homogenised larvae 9 to 17 gram chicken egg protein per 100 gram homogenised edible mealworm or lesser mealworm larvae.

8. The method according to claim 7 whereby the edible larvae comprise between 40% (w/w) and 99% (w/w) of the stated preparation.

9. The method according to claim 7 or 8, further comprising coagulation by heating of the liquid, viscous or dry rehydratable preparation.

10. The method according to claim 9 whereby the coagulation by heating is achieved by means of:
- baking on a baking sheet at a temperature ranging from 90°C to 140°C with frequent stirring of the mixture until it resembles fried minced meat; or
- baking in an oven in a baking form, resembling meatloaf-type feed and/or food product; or
- cooking of the liquid, viscous or dry rehydratable preparation of mealworm or lesser mealworm larvae in a sealed casing to form a sausage-type feed and/or food product; or
- baking on a baking sheet or in a pan without stirring to form a pancake or omelette-type food product; or
- pouring into an open baking form such as a baking ring whereby the whole mixture is then baked on a baking sheet or in a pan, to form a hamburger-type feed and/or food product.

11. Use of the preparation according to any of the claims 1 to 3 for the production of insect-based feed and/or food products by coagulation by heating in a form that determines the final form of the insect-based feed and/or food products
- whereby the heating is cooking with frequent stirring to form a granular preparation with the appearance of cooked minced meat; or
- whereby the heating is baking on a flat sheet without stirring to form an insect pancake or an insect omelette; or
- whereby the heating is heating in a baking form in an oven to form a baked preparation with the appearance of a meatloaf; or
- whereby the preparation is placed in a sealed casing and cooked to form a cooked preparation with the appearance of a sausage; or
- whereby the preparation is placed in an open baking form such as a baking ring and baked on a baking sheet or in a pan to form a cooked preparation with the appearance of a hamburger; or
- whereby the preparation is heated to form stir-fry strips and cubes.

## Patentansprüche

1. Flüssige, viskose oder trockene, rehydratisierbare Präparation, umfassend homogenisierte Mehlwurm- oder Getreideschimmelkäferlarven und ein Hühnereiweiß als Bindemittel, wobei die Präparation 9 bis 17 Gramm trockenes Hühnereiweiß pro 100 Gramm Nassgewicht homogenisierter Mehlwurm- oder Getreideschimmelkäferlarven enthält.

2. Präparation nach Anspruch 1, wobei die Präparation Larven in einer Konzentration zwischen 40 Gew.-% und 99 Gew.-% umfasst.

3. Präparation nach Anspruch 1 oder 2, die Kartoffelstärke in einem Verhältnis von weniger als 1 zu 5 und vorzugsweise von weniger als 1 zu 10 des hydrophilen Eiweißes enthält.

4. Festes, feuchtes Futter- und/oder Nahrungsmittelprodukt, umfassend die Präparation nach einem der Ansprüche 1 bis 3.

5. Festes, feuchtes Futter- und/oder Nahrungsmittelprodukt nach Anspruch 4, das das Aussehen von Hackfleisch, Pfannkuchen, Wurst, Hamburger, Würfeln, Pfannenstreifen, Würstchen oder Würfeln aufweist, zur Verwendung in Tiernahrung.

6. Verwendung des festen feuchten Produkts nach Anspruch 4 oder 5 als Fleisch- und/oder Fisch-Ersatz in der Futter- und/oder Nahrungsmittelindustrie.

7. Verfahren zum Herstellen einer flüssigen, viskosen oder trockenen, rehydratisierbaren Präparation aus Mehlwurm- oder Getreideschimmelkäferlarven, umfassend den Schritt einer Homogenisierung der Larven und ein Zugeben, zu den homogenisierten Larven, von 9 bis 17 Gramm Hühnereiweiß pro 100 Gramm homogenisierter essbarer Mehlwurm- oder Getreideschimmelkäferlarven.

8. Verfahren nach Anspruch 7, wobei die essbaren Larven zwischen 40 Gew.-% und 99 Gew.-% der genannten Präparation umfassen.

9. Verfahren nach Anspruch 7 oder 8, ferner umfassend eine Koagulation durch ein Erhitzen der flüssigen, viskosen oder trockenen, rehydratisierbaren Präparation.

10. Verfahren nach Anspruch 9, wobei die Koagulation durch das Erhitzen erreicht wird mittels:
- Backen auf einem Backblech bei einer Temperatur in einem Bereich von 90 °C bis 140 °C unter häufigem Umrühren der Mischung, bis sie gebratenem Hackfleisch ähnelt; oder
- Backen in einem Ofen in einer Backform, die einem hackbratenartigen Futter- und/oder Nahrungsmittelprodukt ähnelt; oder
- Kochen der flüssigen, viskosen oder trockenen, rehydratisierbaren Präparation von Mehlwurm- oder Getreideschimmelkäferlarven in einer versiegelten Hülle, um ein wurstartiges Futter- und/oder Nahrungsmittelprodukt auszubilden; oder
- Backen auf einem Backblech oder in einer Pfanne ohne Umrühren, um ein pfannkuchen- oder omelettartiges Nahrungsmittelprodukt auszubilden; oder
- Gießen in eine offene Backform, wie einen Backring, wobei die gesamte Mischung dann auf einem Backblech oder in einer Pfanne gebacken wird, um ein hamburgerartiges Futter- und/oder Nahrungsmittelprodukt auszubilden.

11. Verwendung der Präparation nach einem der Ansprüche 1 bis 3 für die Produktion von Futter- und/oder Nahrungsmittelprodukten auf Insektenbasis durch die Koagulation durch das Erhitzen in einer Form, die die endgültige Form der Futter- und/oder Nahrungsmittelprodukte auf Insektenbasis bestimmt
- wobei das Erhitzen ein Kochen unter häufigem Umrühren ist, um eine körnige Präparation mit dem Aussehen von gekochtem Hackfleisch auszubilden; oder
- wobei das Erhitzen das Backen auf einem flachen Blech ohne Umrühren ist, um einen Insektenpfannkuchen oder ein Insektenomelett auszubilden; oder
- wobei das Erhitzen das Erhitzen in einer Backform in einem Ofen ist, um eine gebackene Präparation mit dem Aussehen eines Hackbratens auszubilden; oder
- wobei die Präparation in eine versiegelte Hülle platziert und gekocht wird, um eine gekochte Präparation mit dem Aussehen einer Wurst auszubilden; oder
- wobei die Präparation in eine offene Backform, wie einen Backring, platziert und auf einem Backblech oder in einer Pfanne gebacken wird, um eine gekochte Präparation mit dem Aussehen eines Hamburgers auszubilden; oder
- wobei die Präparation erhitzt wird, um Pfannenstreifen und Würfel auszubilden.

## Revendications

1. Préparation réhydratable liquide, visqueuse ou sèche comprenant des larves homogénéisées de ténébrion mat ou de petit ténébrion mat et une protéine d'oeuf de poule en tant qu'agent de liaison, moyennant quoi la préparation contient de 9 à 17 grammes de protéine sèche d'oeuf de poule pour 100 grammes de poids humide de larves homogénéisées de ténébrion mat ou de petit ténébrion mat.

2. Préparation selon la revendication 1, moyennant quoi ladite préparation comprend des larves en une concentration comprise entre 40 % (en poids) et 99 % (en poids).

3. Préparation selon la revendication 1 ou 2, qui contient de l'amidon de pomme de terre dans un rapport inférieur à 1 pour 5 et de préférence inférieur à 1 pour 10 de la protéine hydrophile.

4. Aliment humide solide pour animaux et/ou produit alimentaire comprenant la préparation selon l'une quelconque des revendications 1 à 3.

5. Aliment humide solide pour animaux et/ou produit alimentaire selon la revendication 4, qui a l'apparence de hachis, crêpe, saucisse, hamburger, cubes, languettes à sauter, saucisses ou cubes pour utilisation dans un aliment pour animaux de compagnie.

6. Utilisation du produit humide solide selon la revendication 4 ou 5 en tant que substitut de viande et/ou de poisson dans l'industrie alimentaire animale et/ou alimentaire.

7. Procédé permettant de fabriquer une préparation réhydratable liquide, visqueuse ou sèche de larves de ténébrion mat ou de petit ténébrion mat comprenant l'étape d'homogénéisation desdites larves et d'ajout auxdites larves homogénéisées de 9 à 17 grammes de protéine d'oeuf de poule pour 100 grammes de larves comestibles homogénéisées de ténébrion mat ou de petit ténébrion mat.

8. Procédé selon la revendication 7 moyennant quoi les larves comestibles constituent entre 40 % (en poids) et 99 % (en poids) de la préparation indiquée.

9. Procédé selon la revendication 7 ou 8, comprenant en outre une coagulation par chauffage de la préparation réhydratable liquide, visqueuse ou sèche.

10. Procédé selon la revendication 9 moyennant quoi la coagulation par chauffage est réalisée au moyen :
- d'une cuisson sur une feuille de cuisson à une température allant de 90 °C à 140 °C avec agitation fréquente du mélange jusqu'à ce qu'il ressemble à de la viande hachée frite ; ou
- d'une cuisson dans un four dans un moule de cuisson, ressemblant à un produit alimentaire animal et/ou alimentaire de type pain de viande ; ou
- d'une mise en cuisson de la préparation réhydratable liquide, visqueuse ou sèche de larves de ténébrion mat ou de petit ténébrion mat dans une enceinte scellée pour former un produit alimentaire animal et/ou alimentaire de type saucisse ; ou
- d'une cuisson sur une feuille de cuisson ou dans un poêle sans agitation pour former un produit alimentaire de type crêpe ou omelette ; ou
- d'un déversement dans un moule de cuisson ouvert tel qu'un anneau de cuisson moyennant quoi le mélange dans son intégralité est ensuite cuit sur une feuille de cuisson ou dans une poêle, pour former un produit alimentaire animal et/ou alimentaire de type hamburger.

11. Utilisation de la préparation selon l'une quelconque des revendications 1 à 3 pour la production de produits alimentaires animaux et/ou alimentaires à base d'insectes par coagulation par chauffage dans un moule qui détermine la forme finale des produits alimentaires animaux et/ou alimentaires à base d'insectes
- moyennant quoi le chauffage est une mise en cuisson avec agitation fréquente pour former une préparation granulaire avec l'apparence de viande hachée cuisinée ; ou
- moyennant quoi le chauffage est une cuisson sur une feuille plate sans agitation pour former une crêpe d'insectes ou une omelette d'insectes ; ou
- moyennant quoi le chauffage est un chauffage dans un moule de cuisson dans un four pour former une préparation cuite avec l'apparence d'un pain de viande ; ou
- moyennant quoi la préparation est placée dans une enceinte scellée et mise en cuisson pour former une préparation cuisinée avec l'apparence d'une saucisse ; ou
- moyennant quoi la préparation est placée dans un moule de cuisson ouvert tel qu'un anneau de cuisson et cuite sur une feuille de cuisson ou dans une poêle pour former une préparation cuisinée avec l'apparence d'un hamburger ; ou
- moyennant quoi la préparation est chauffée pour former des languettes et cubes à sauter.
